# EUROPÄISCHE PATENTANMELDUNG

(11) **EP 0 672 714 A1**
(43) Veröffentlichungstag der Anmeldung: **20.09.1995**
(21) Anmeldenummer: 95102963.6
(22) Anmeldetag: 02.03.1995
(51) Int. Cl.: C08K 5/17, C08K 5/29

(54) **Verwendung von cycloaliphatischen Diaminen zur Herstellung von lagerstabilen Plastisolen und Organosolen**

(30) Priorität: 15.03.1994 DE 4408728
(71) Anmelder: BAYER AG, 51368 Leverkusen (DE)
(72) Erfinder: Valeri, Thomas, Dr., D-41539 Dormagen (DE); Peter, Rolf, Dr., D-41539 Dormagen (DE); Jürgens, Eberhard, Dr., D-50735 Köln (DE); Breunig, Jürgen, Dr., D-51467 Bergisch Gladbach (DE)

(57) **Zusammenfassung**

Cycloaliphatische Diamine der Formel 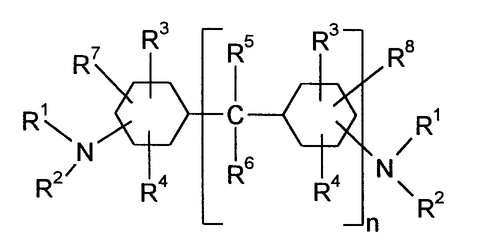
sowie deren Umsetzungsprodukte mit Ketonen, Aldehyden und gesättigten oder ungesättigten Carbonsäuren oder Carbonsäureestern, gegebenenfalls in Kombination mit basisch reagierenden Metallverbindungen, dienen zur Herstellung von Plastisolen und Organosolen auf Basis von organischen Polymeren und Weichmachern.

## Beschreibung

Die vorliegende Erfindung betrifft die Verwendung von speziellen, cycloaliphatischen Diaminen sowie deren Umsetzungsprodukte mit Ketonen, Aldehyden und ungesättigten Carbonsäuren oder Carbonsäureestern zur Herstellung von lagerstabilen Plastisolen und Organosolen. Weiterhin bezieht sich die Erfindung auf lagerstabile Plastisole und Organosole, die spezielle, cycloaliphatische Diamine sowie deren Umsetzungsprodukten mit Ketonen, Aldehyden und ungesättigten Carbonsäuren oder Carbonsäureestern enthalten.

Lagerstabile Plastisole und Organosole sind beispielsweise aus der EP-A 265 371 bekannt. Die dort beschriebenen und beanspruchten Plastisole und Organosole zeichnen sich gegenüber bereits bekannten und als Stand der Technik in der erwähnten europäischen Patentanmeldung diskutierten Plastisolen durch eine verbesserte Lagerstabilität aus und durch die Tatsache, daß die in der europäischen Patentanmeldung beanspruchten Plastisole und Organosole bei verhältnismäßig niedrigen Temperaturen geliert werden können. Dies wird erreicht durch den Zusatz von mehrfunktionellen, basischen Substanzen, die mit den Carboxylgruppenhaltigen, feinteiligen Polymeren in der Dispersion umgesetzt werden können. Als basische Substanzen zur Umsetzung können basische Metallverbindungen mehrwertiger Metalle oder mindestens bifunktionelle Aminverbindungen verwendet werden.

Da Plastisole und Organosole in der Technik eine immer bedeutendere Rolle spielen, z.B. als Dichtungsmassen, als Korrosionsschutzüberzüge für Metalle, zum Imprägnieren und Beschichten von Substraten aus textilen Materialien, als Kabelisolierungen, als Klebemassen sowie zur Herstellung von Formkörpern, werden die technischen Anforderungen an die Plastisole und Organosole, insbesondere was deren Verarbeitbarkeit und deren Lagerstabilität anbetrifft, immer höher.

Aufgabe der vorliegenden Erfindung ist es nun, zum einen insbesondere die Lagerstabilität der Plastisole und Organosole zu verbessern, auch bei höheren Umgebungstemperaturen, zum anderen eine gute Gelierbarkeit bei möglichst tiefen Umgebungstemperaturen zu gewährleisten. Die Aufgabe wird dadurch gelöst, daß man spezielle, cycloaliphatische Diamine bei der Herstellung von Plastisolen und Organosolen verwendet.

Gegenstand der Erfindung ist daher die Verwendung von cycloaliphatischen Diaminen der Formel 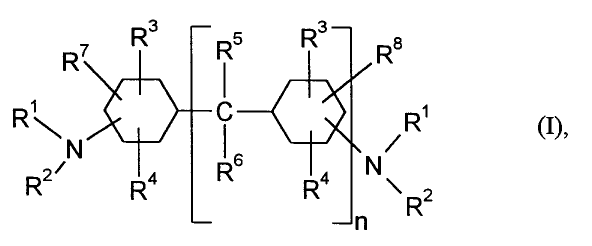
worin
- R¹, R², R³, R⁴, R⁵ und R⁶: gleich oder verschieden sind und für Wasserstoff oder C₁-C₆-, bevorzugt C₁-C₄-Alkyl stehen,
- R⁷ und R⁸: gleich oder verschieden sind und für Wasserstoff, C₁-C₆-, bevorzugt C₁-C₄-Alkyl oder NR¹R² mit der oben genannten Bedeutung für R¹ und R² oder für OR¹ oder SR¹ stehen,
- n: für die Zahlen 1 bis 6, bevorzugt 1 bis 4 steht,
sowie deren Umsetzungsprodukte mit Ketonen, Aldehyden und ungesättigten oder gesättigten Carbonsäuren oder Carbonsäureestern mit 2 bis 6 C-Atomen im Säureteil und 1 bis 4 C-Atomen im Esterteil,
gegebenenfalls in Kombination mit basisch reagierenden Metallverbindungen,
zur Herstellung von Plastisolen und Organosolen auf Basis von organischen Polymeren und organischen Weichmachern.

Bevorzugt werden bei der Herstellung von Plastisolen und Organosolen cycloaliphatische Diamine der Formel 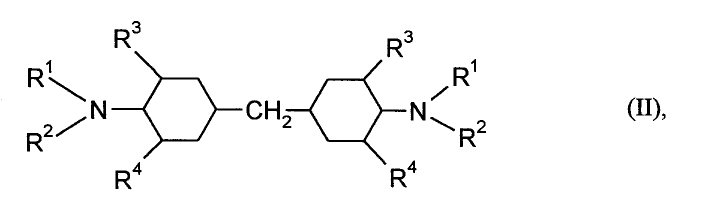
worin
- R¹ bis R⁴: die in Formel (I) genannte Bedeutung besitzen sowie die Umsetzungsprodukte der Diamine der Formel (II) mit Ketonen, Aldehyden und ungesättigten oder gesättigten Carbonsäuren oder Carbonsäureester mit 2 bis 6 Kohlenstoffatomen im Säureteil und 1 bis 4 Kohlenstoffatomen im Esterteil.

Besonders bevorzugt werden folgende cycloaliphatische Diamine verwendet:
4,4'-Diamino-dicyclohexyl-methan,
4,4'-Diamino-3,3'-dimethyl-dicyclohexyl-methan,
4,4'-Diamino-3,3'-diethyl-dicyclohexyl-methan,
2,4,4'-Triamino-5-methyl-dicyclohexyl-methan,
Bis-(4-Amino-3,5-dimethyl-cyclohexyl-methan,
Bis(4-Amino-3,5-diethyl-cyclohexyl)methan oder
Bis-(4-Amino-3-methyl-5-ethyl-cyclohexyl)methan.

Neben den erwähnten Umsetzungsprodukten der Diamine mit Ketonen, Aldehyden und ungesättigten oder gesättigten Carbonsäuren oder Carbonsäureestern können auch die entsprechenden Additionsprodukte der cycloaliphatischen Diamine und Oligomer-Verbindungen mit z.B. Wasser, Mineralsäure (HCl, H₂SO₄) oder Glykolen (z.B. Diethylenglykol) eingesetzt werden. Die Umsetzung der erfindungsgemäßen cycloaliphatischen Diamine mit Ketonen, Aldehyden und ungesättigten Carbonsäuren oder Carbonsäureestern bzw. die Addition der oben genannten Verbindungen an die erfindungsgemäßen Diamine sind als Reaktionen bekannt und beispielsweise allgemein beschrieben in Houben-Weyl, Methoden der organischen Chemie, 4. Auflage, Organo-Stickstoffverbindung IV, Teil 2, Band E 16d, S. 646-1329.

Als Ketone, Aldehyde, ungesättigte Carbonsäuren oder Carbonsäureestern, die für die erwähnte Umsetzung mit den erfindungsgemäßen Diaminen in Frage kommen, werden beispielsweise genannt: iso-Butyraldehyd, Fumarsäureethylester, Maleinsäure, Essigsäure, bevorzugt iso-Butyraldehyd. Als Additonspartner für die Diamine bieten sich an: Wasser, Salzsäure, Schwefelsäure, bevorzugt Wasser.

Die erfindungsgemäßen cycloaliphatischen Diamine, deren Umsetzungsprodukte und deren Additionsprodukte können sowohl einzeln als auch im Gemisch untereinander bei der Herstellung von Plastisolen und Organosolen eingesetzt werden.

Weiterhin ist es möglich, die erfindungsgemäßen cycloaliphatischen Diamine bzw. deren Umsetzungsprodukte oder Additionsprodukte zusammen mit basischen Metallverbindungen für die Herstellung von Plastisolen und Organosolen einzusetzen. Als basische Metallverbindungen kommen insbesondere in Frage: Zinkoxid, Calciumcarbonat, Magnesiumoxid und -carbonat, Calciumstearat, ganz besonders bevorzugt Zinkoxid und Calciumstearat.

Die erfindungsgemäßen cycloaliphatischen Diamine sowie deren Umsetzungs- und Additionsprodukte (nachfolgend kurz "erfindungsgemäße Diamine" genannt) können in Mengen von 0,1 bis 20 Gew.-%, bezogen auf die Menge Polymer, eingesetzt werden. Bevorzugt werden die erfindungsgemäßen Diamine in Mengen von 0,5 bis 5 Gew.-% eingesetzt.

Werden basische Metallverbindungen bei der Herstellung von Plastisolen und Organosolen mitverwendet, so können diese in Mengen von 0,5 bis 150, bezogen auf die Menge Polymer, insbesondere in Mengen von 1 bis 50, eingesetzt werden.

Als Plastisole und Organosole, die mit den erfindungsgemäßen Diaminen stabilisiert werden können, eignen sich insbesondere solche, die als organische Polymere feinteilige Copolymerisate von beliebigen Monomeren mit polymerisierbaren Säuren bilden, z.B. Copolymere von Vinylchlorid, Vinylidenchlorid, Acrylaten, Methacrylaten, Maleinaden, Styrol, Methylstyrol, Acrylamide, Vinylester, Methacrylnitril, Vinylethern, Acrylnitril, Olefinen oder Dienen mit polymerisierbaren Säuren wie z.B. Acryl-, Methacryl-, Itacon-, Kroton-, Malein- oder Fumarsäure. Bevorzugt sind Plastisole auf Basis von Styrolacrylnitril-Harzen mit einem Anteil von 5 bis 60 Gew.-% Acrylnitril, vorzugsweise 5 bis 40 Gew.-%, insbesondere 10 bis 35 Gew.-%, wobei die SAN-Harze vorteilhafter Weise noch eine geringe Säuremenge (0,5 bis 15, insbesondere 2 bis 7 Gew.-%) enthalten sollten. Weiterhin sind Plastisole bevorzugt auf Basis von Polyvinylchlorid und Polymethacrylsäureester sowie denen Copolymerisate.

Als organische Weichmacher kommen hochsiedende organische Lösungsmittel, die bei höherer Temperatur als Weichmacher fungieren, in Frage, wie sie bereits bei der Herstellung von Plastisolen und Organosolen bekannt sind. Verwiesen wird in diesem Zusammenhang u.a. auf DE 2 454 235 und EP 265 371. Eine umfassende Definition des Begriffs Weichmacher und eine Erklärung der chemischen und physikalischen Wechselwirkungen, die zwischen einem Weichmacher und einem Polymer bestehen sind nachzulesen in: "Beschichtungen mit Lacken und Kunststoffen", K. Weinmann (Verlag W.A. Colom, Stuttgart 1967), Seite 47 bis 158.

Zur Regulierung der Verarbeitungseigenschaften kann den erfindungsgemäßen Plastisolen auch ein Anteil flüchtiger Lösemittel zugesetzt werden. Bei einem Anteil von ca. 5 bis 10 % flüchtiger Lösemittel bezeichnet man die Plastisole als Organosole (s.a. H.A. Sarvertnick, "Plastisols and Organosols", S. 201, Nostrand Reinhold Company, New York 1972).

In vorteilhafter Weise lassen sich als Weichmacher verwenden Ester der Phthal-, Adipin-, Sebacin-, Phosphor- und Zitronensäure, chlorierte Kohlenwasserstoffe, flüssige Polyester und epoxidierte natürliche Öle wie Leinöl oder Sojaöl. Weiterhin höhersiedende, polyfunktionelle Acryl- oder Allylverbindungen.

Die Menge an Weichmachern beträgt üblicherweise 30 bis 150 Gew.-Teile, bevorzugt 80 bis 120 Gew.-Teile pro 100 Gew.-Teile eingesetztes organisches Polymer.

Ein weiterer Gegenstand der vorliegenden Erfindung sind daher auch Plastisole und Organosole auf Basis von organischen Polymeren und organischen Weichmachern, die dadurch gekennzeichnet sind, daß sie cycloaliphatische Diamine der Formel 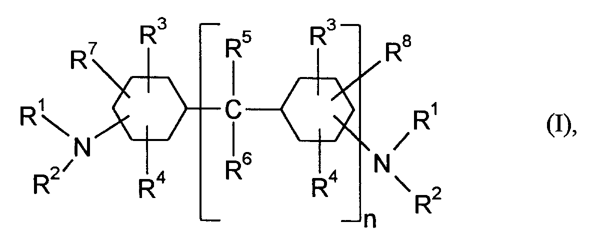
worin
R¹, R², R³, R⁴, R⁵, R⁶, R⁷ und R⁸ sowie n die zuvor erwähnte Bedeutung besitzen,
sowie deren Umsetzungsprodukte mit Ketonen, Aldehyden und ungesättigten oder gesättigten Carbonsäuren oder Carbonsäureestern mit 2 bis 6 Kohlenstoffatomen im Säureteil und 1 bis 4 Kohlenstoffatomen im Esterteil,
und gegebenenfalls basische Metallverbindungen, enthalten.

Die erfindungsgemäßen Plastisole und Organosole werden in üblicher Weise hergestellt durch Zusammenmischen der organischen Polymeren mit den organischen Weichmachern und den erfindungsgemäßen cycloaliphatischen Diaminen. Die Abmischung der Paste erfolgt nach der dem Fachmann bekannten Weise. Die stabilisierenden Additive werden zweckmäßiger Weise in den Weichmachern gelöst oder dispergiert. In Einzelfällen kann es von Vorteil sein, die fertige Paste vor der weiteren Verarbeitung bei 5 bis 15°C für 10 bis 48 Stunden zu lagern.

Außer den erwähnten erfindungsgemäßen Diaminen können den erfindungsgemäßen Plastisolen und Organosolen weitere Additive hinzugefügt werden, wie inerte Füllstoffe, z.B. Kreiden, Schwerspat, Kaolin, hochdisperse Kieselsäuren, Aluminiumsilikate, Talkum, Glaspulver, Sand, Aluminiumoxid und -hydroxid, Antimontrioxid, Metallseifen, Titandioxid, Ruß, Farbstoffe, Pigmente und alle Arten oberflächenbehandelter (z.B. silanisierter) Füllstoffe und Pigmente sowie Korrosionsinhibitoren, Viskositätsregler, Stabilisatoren gegen Wärme, Licht und Oxidation, Treibmittel sowie Haftvermittler. In diesem Zusammenhang wird auf DE 2 454 235 hingewiesen.

Als geeignete Haftvermittler kommen die dem Fachmann bekannten Haftvermittler in Frage, wie z.B.: Ein- und Zweikomponenten Isocyanat-Haftvermittler (Desmodur, Desmophen, Desmocap der Fa. Bayer), vorzugsweise blockierte Systeme, Epoxydhaftvermittlersystem (Fa. Ciba), Polyaminoamide (wie z.B, Euretek-Typ der Fa. Witco und Nourybond-Typen der Fa. Akzo). Resorcin-haltige Systeme, u.z.B. radikalisch polymerisierbare Monomere wie Triethylenglykoldimethacrylat.

Der Haftvermittler kann in der Paste in geeigneter Weise dispergiert werden oder bereits bei der Aufarbeitung des Latex, während der Sprühtrocknung auf die Polymerteilchen aufgebracht werden. Legt man Wert auf eine Kombination von Haftung und ausreichender Lagerstabilität können alle bekannten Haftvermittler eingesetzt werden, deren Reaktivität gegenüber den stabilisierten Additiven nach Formel I ausreichend gering ist, um eine unerwünschte Reaktion zwischen Haftvermittlerkomponente und stabilisierenden Additiv zu verhindern. Insbesondere kommen hierfür in Frage Polyaminoamide und blockierte Isocyanate. Durch die vernetztende Reaktion des Diamins mit z.B. Isocyanaten kann neben der guten Lagerstabilität ein zusätzlicher positiver Effekt in den mechanischen Eigenschaften erreicht werden.

Die erwähnten Additive können in Mengen von 0,5 bis 250 Gew.-%, bevorzugt 15 bis 150 Gew.-%, bezogen auf eingesetztes Polymer, den erfindungsgemäßen Plastisolen und Organosolen zugesetzt werden. Die optimalste Menge läßt sich leicht durch entsprechende Vorversuche ermitteln.

Die erfindungsgemäßen Plastisole eignen sich besonders als Dichtungsmassen, als Korrosionsschutzüberzüge für Metalle lackierte Bleche, zum Imprägnieren und Beschichten von Substraten aus textilen Material oder Papier, als Kabelisolierungen, als Klebemassen sowie zur Herstellung von Formkörpern.

### Beispiele

### Beispiele 1A und 1B:

Ein sprühgetrocknetes Emulsionspolymerisat aus 59 Teilen Styrol, 25 Teilen Acrylnitril, 10 Teilen Butylacrylat und 6 Teilen Acrylsäure dient zur Herstellung einer Paste mit Unimoll BB (Benzylbutylphthalat, Fa. Bayer):
- 1A:: 40 g Polymer
60 g Benzylbutylphthalat (Unimoll BB)
- 1B:: 40 g Polymer
60 g Benzylbutylphthalat (Unimoll BB)
5 g 4,4'-Diamino-3,3'-dimethyl-dicyclohexylmethan
Direkt nach der Herstellung sind beide Pasten dünn-viskos. Nach Lagerung bei 23°C ist die Probe 1A nach 48 Stunden hochviskos bzw. gummiartig, während die Probe 1B mindestens 90 Tage pastös bleibt. Beide Proben lassen sich bei Temperaturen von 130 bis 160°C zu weichen, gummielastischen Gelaten gelieren, wobei die mit Additiv versehene Probe (Gelierung bei 160°C) deutlich verbesserte mechanische Eigenschaften zeigt.

| | 1A | 1B | |
|---|---|---|---|
| Festigkeit | 0,85 | 3,71 | (MPa) (bestimmt nach DIN 53 455) |
| Dehnung | 660 | 286 | (%) (bestimmt nach DIN 53 455)) |

### Beispiele 2A und 2B

Ein sprühgetrocknetes Emulsionspolymerisat aus 64 Teilen Styrol, 10 Teilen Acrylnitril, 20 Teilen Butylacrylat und 6 Teilen Acrylsäure dient zur Herstellung einer Paste:
- 2A:: 40 g Polymer
60 g Di-2-ethylhexylphthalat
- 2B:: 40 g Polymer
60 g Di-2-ethylhexylphthalat
2 g 4,4'-Diamino-3,3'-dimethyl-dicyclohexylmethan
Beide Proben werden als niedrigviskose Pasten erhalten. Zunächst werden die Pasten bei 8°C für 24 h gelagert. Anschließend folgt eine Lagerung bei 45°C. Während die Probe 2A bereits nach 2 Minuten geliert ist, kann die Probe 2B über 4 Stunden gelagert werden ohne vollständig zu gelieren. Beide Proben lassen sich bei Temperaturen von 130 bis 160°C zu weichen, gummielastischen Gelaten gelieren.

### Beispiele 3A und 3B

Ein E-PVC-Typ (Vestolit E 7012, Fa. Hüls AG, Deutschland) wurde im Dissolver mit Benzylbutylphthalat (Unimoll BB) zu einer niedrigviskosen Paste angerührt:
- 3A:: 40 g Polymer
60 g Benzylbutylphthalat (Unimoll BB)
- 3B:: 40 g Polymer
60 g Benzylbutylphthalat (Unimoll BB)
2 g 4,4'-Diamino-3,3'-dimethyl-dicyclohexylmethan
Die Prüfung der Lagerfähigkeit erfolgt in einem Viskosimeter bei konstanter Drehzahl von 400 U/min und einer Meßtemperatur von 55°C. Während die Paste 3A bereits nach 41 Minuten einen deutlichen Viskositätsanstieg zeigt, bleibt die Probe 3B über 5 Stunden unverändert.

### Beispiele 4A und 4B

Ein PMMA-Pasten Typ der Fa. Röhm, Deutschland (Plex 4944 F) wurde im Dissolver mit Unimoll BB, Bayer AG angepastet:
- 4A:: 40 g Polymer
60 g Benzylbutylphthalat (Unimoll BB)
- 4B:: 40 g Polymer
60 g Benzylbutylphthalat
2 g 4,4'-Diamino-3,3'-dimethyl-dicyclohexylmethan
Direkt nach der Herstellung sind beide Pasten teigartig. Nach Lagerung bei 55°C ist die Probe 4A nach 75 Minuten geliert, während die Probe 4B mindestens 3 Stunden pastös bis knetbar bleibt. Beide Proben lassen sich bei Temperaturen von 140 bis 160°C zu weichen, gummielastischen Gelaten gelieren.

### Beispiele 5A und 5B

Ein sprühgetrocknetes Emulsionspolymerisat aus 59 Teilen Styrol, 25 Teilen Acrylnitril, 10 Teilen Butylacrylat und 6 Teilen Acrylsäure dient zur Herstellung einer Paste mit Mesamoll (Alkylsulfonsäureester, Fa. Bayer) als Weichmacher:
- 5A:: 40 g Polymer
60 g Alkylsulfonsäureester (Mesamoll, Fa. Bayer)
- 5B:: 40 g Polymer
60 g Alkylsulfonsäureester (Mesamoll, Fa. Bayer)
5 g 4,4'-Diamino-3,3'-dimethyl-dicyclohexylmethan
Direkt nach der Herstellung sind beide Pasten dünn-viskos. Nach Lagerung bei 55°C ist die Probe 5A nach 150 Minuten hochviskos bzw. gummiartig, während die Probe 5B mindestens 1100 Minuten bei 65°C pastös bzw. teigartig bleibt. Beide Pasten lassen sich bei Temperaturen von 130 bis 160°C zu weichen, gummielastischen Gelaten gelieren.

### Beispiele 6A bis 6L

2000 ml Latex eines Emulsionspolymerisats aus 25 % ACN, 6 % Acrylsäure, 10 % Butylacrylat und 59 % Styrol wurden mittels Sprühtrocknung aufgearbeitet. 800 g des trockenen Pulvers wurden mit 1000 ml Unimoll BB der Fa. Bayer AG (Benzylbutylphthalat) bei 2000 Upm in einem Labordissolver zur Paste gemischt. Je 100 g der fertigen Paste wurden mit den in Tabelle 1 angegebenen Zusätzen vermischt. Anschließend wurde bei den in Tabelle 1 angegebenen Temperaturen die Zeit bestimmt, bis zu der die anfangs flüssigen Pasten teigartig bzw. gummiartig geworden sind.

**Tabelle 1**

| Bsp. Nr. | Zusatz | Teile | teigartig bzw. gummiartig bei 23°C nach Tagen | teigartig bzw. gummiartig bei 45°C nach Minuten | teigartig bzw. gummiartig bei 55°C nach Minuten |
|---|---|---|---|---|---|
| 6A Vergl. | kein Zusatz | - | 2 | 25 | < 1 |
| 6B | 4,4'-Diamino-3,3'-dimethyl-dicyclohexylmethan | 1,2 | > 90 | > 3000 | 213 |
| 6C Vergl. | ZnO | 2 | 8 | 30 | < 5 |
| 6D Vergl. | Isophorondiamin | 2 | 10 | 32 | < 10 |
| 6E | 4,4-Diaminodicyclohexylmethan (Fa. Hüls) | 2 | > 60 | > 1300 | 154 |
| 6F Vergl. | Ethylendiamin | 2 | 1 | 2 | < 1 |
| 6G | 4,4'-Diamino-dicyclohexylmethan (Fa. BASF) | 1,2 | > 60 | > 1350 | 160 |
| 6H Vergl. | 1,3-Bis(amino-methyl)cyclohexan | 2 | < 3 | 33 | < 10 |
| 6I Vergl. | Hexadecylamin | 2 | < 1 | 14 | 2 |
| 6K | Additiv aus 6B umgesetzt mit iso-Butyraldehyd zum entsprechenden Aldimin | 2 | > 60 | > 1400 | 41 |
| 6L Vergl. | 4,4'-Diaminodiphenylmethan | 2 | - | 43 | - |

## Patentansprüche

1. Verwendung von cycloaliphatischen Diaminen der Formel 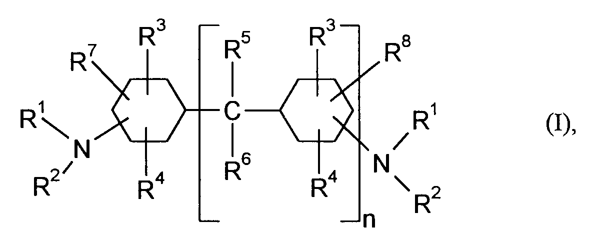 worin
R¹, R², R³, R⁴, R⁵ und R⁶ gleich oder verschieden sind und für Wasserstoff oder C₁-C₆-Alkyl stehen,
R⁷ und R⁸ gleich oder verschieden sind und für Wasserstoff, C₁-C₆-Alkyl oder NR¹R² oder OR¹ oder SR¹ mit der oben genannten Bedeutung für R¹ und R² stehen und
n 1 bis 6 bedeutet,
sowie deren Umsetzungsprodukte mit Ketonen, Aldehyden und ungesättigten oder gesättigten Carbonsäuren oder Carbonsäureestern mit 2 bis 6 C-Atomen im Säureteil und 1 bis 4 C-Atomen im Esterteil,
gegebenenfalls in Kombination mit basisch reagierenden Metallverbindungen,
zur Herstellung von Plastisolen und Organosolen auf Basis von organischen Polymeren und Weichmachern.

2. Verwendung der cycloaliphatischen Diamine nach Anspruch 1 in Mengen von 0,1 bis 20 Gew.-%, bezogen auf die Menge an eingesetztem Polymer.

3. Plastisole und Organosole auf Basis von organischen Polymeren und organischen Weichmachern, dadurch gekennzeichnet, daß sie cycloaliphatische Diamine der Formel 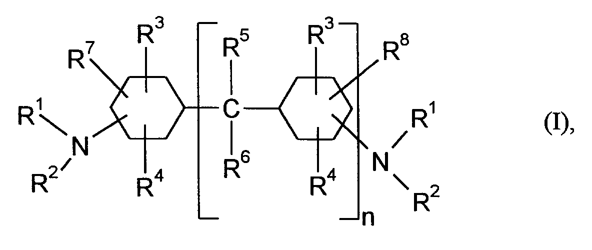 worin
R¹, R², R³, R⁴, R⁵, R⁶, R⁷, R⁸ und n die in Anspruch 1 genannte Bedeutung besitzen,
sowie deren Umsetzungsprodukte mit Ketonen, Aldehyden und ungesättigten oder gesättigten Carbonsäuren oder Carbonsäureestern mit 2 bis 6 C-Atomen im Säureteil und 1 bis 4 C-Atomen im Esterteil, gegebenenfalls in Kombination mit basisch reagierenden Metallverbindungen, in Mengen von 0,1 bis 20 Gew.-%, bezogen auf die Menge an eingesetztem Polymer, enthalten.
